# EUROPEAN PATENT SPECIFICATION

(11) **EP 1 965 284 B1**
(45) Date of publication and mention of the grant of the patent: **13.05.2009**
(21) Application number: 07004350.0
(22) Date of filing: 02.03.2007
(51) Int. Cl.: G06F 1/16, H04B 1/20, H01H 9/02

(54) **Electronic device controlled by an detachable remote control**
Elektronische Vorrichtung gesteuert durch eine lösbare Fernbedienung
Dispositif électrique controllé par une télécommande détachable

(43) Date of publication of application: 03.09.2008
(73) Proprietor: Harman Becker Automotive Systems GmbH, 76307 Karlsbad (DE)
(72) Inventor: Johannsen, Ulrike, 70794 Filderstadt (DE)
(74) Representative: Bertsch, Florian Oliver

(56) References cited:
- DE-U1-0202005 009 64
- FR-A1- 2 768 975
- US-A- 4 918 439

## Description

### Background of the invention

The present invention relates to an electronic device and particularly to an electronic device which can be controlled by an detachable remote control.

A main problem of electronic devices which can be controlled by remote control units can be seen in the fact that these remote control units often get lost after the remote control unit is used to control the electronic device. Especially in the case the remote control unit is just forgotten when the electronic device, for example a notebook or a DVD player, is packed into the transportation back after usage. Additionally it is sometimes difficult for people to know where to put the remote control unit when the normal HMI (HMI=Human-Machine Interface) of a system is used. Furthermore, another aspect of the state of the art remote control units is that sometimes buttons are provided twice, namely on the main unit as well as on the remote control unit when there should exist the possibility to control the the operation of the main unit also without the remote control unit. This results in high production costs as these numerous number of buttons has to be provided twice.

US 4,918,439 describes a remote control device which can be used for controlling TVs, video recorders, stereos or the like. Via infrared LEDs, which are located in the remote control device, a wireless transmission of output signals can be transmitted to a main device. In this operating mode, the remote control device can be positioned outside a cradle. In a second operation mode, which is used when a user of the remote control device is not at home but wants to control the video recorder, said cradle is used. The cradle comprises a connector on a surface of cradle which matches with a connector on the bottom of the transducer module of the remote control device. Signals, input to the remote control device are then transmitted via the connectors to the cradle and from the cradle via a telephone line to the main device.

Therefore it is the object of the present invention to provide an electronic device as well as a method for operating an electronic device which avoids a forgetting or losing of the remote control unit and which as well provides the possibility of keeping the production costs low.

### Summary of the invention

This object is achieved by an electronic device with the features according to claim 1 as well as by a method with the features according to claim 16.

The present invention is based on the finding that the previously mentioned object can be achieved by an electronic device having a main unit and a remote control unit, wherein the remote control unit can be used as a normal remote control unit having a wireless transmission when the remote control unit is positioned outside the receptacle and which can be plugged into the electronic device, namely the main unit that it controls, so that it becomes an integral part of the HMI. Therefore, the remote control unit according to the present invention provides the possibility that it can be used as a conventional remote control unit whereas due to the possibility that it can be plugged into the main unit of the electronic device a forgetting or loosing of the remote control unit when packing the electronic device into a transportation bag can also be reduced. The missing remote control unit will be easily detected by the user seeing the receptacle empty. In addition, due to an operation mode of the electronic device in which the remote control unit is plugged into the main unit and is still controlling the operation of the main unit (respectively the data processor) it is also possible to reduce the number of components of the electronic device as the control input means only have to be provided once, namely on the remote control unit.

Thus, the present invention provides the advantage that it firstly significantly simplifies the handling of the electronic device as the possibility of loosing the remote controller unit can be reduced and secondly it reduces the production costs of the electronic due to the reduced number of necessary components.

According into a first aspect the present invention provides an electronic device comprising:
- a main unit having
   - a data processor which is configured for processing data in response to a control signal;
   - a receptacle, and
- a remote control unit comprising input means for controlling the electronic device, wherein in a first operating mode, in which the remote control unit is located outside the receptacle of the main unit, the remote control unit is configured for providing said control signal via a wireless transmission to said data processor in response to control actions manually input via said input means by a user of the electronic device, and
wherein, in a second operating mode, in which the remote control unit is positioned in said receptacle of the main unit, the control signal is also generated in response to control actions manually input via said input means of the remote control unit.

According to a further embodiment of the present invention said remote control unit and said main unit each have a connector which is adapted for transferring said control signal from said control unit to said main unit such that in the second operation mode both connectors are directely in contact with each other. This provides the advantage that the transmission of the control signal can be based on a wire-line transmission which is normally more secure either in terms of robustness against disturbances as well as in terms of protection against unauthorized data sniffing.

Alternatively, said remote control unit can be adapted to transfer the control unit in the second operation mode wirelessly from the remote control unit to the main unit. This provides the advantage that no additional connector has to be used but the data transmission as in the first operation mode can also be used which, in turn, reduces the production costs of such a electronic device.

Furthermore, it is also advantageous when said remote control unit is configured for unidirectionally transfering signals, especially said control signal, to said main unit. Such a construction of the remote control unit provides the advantage of a very simple constructed remote control unit as no receiver for signals from the main unit has to be provided in the remote control unit.

In another embodiment of the present invention the main unit has further input means, wherein the data processor is configured for processing the data in response to the control signal received from the remote control unit which was actuated for achieving a first predetermined result wherein said predetermined result cannot be achieved when further input means of the main unit are achieved. This provides the advantage that only one set of buttons for inputing control actions by the user of the electronic device has to be provided which is located on/in the remote control unit. The main unit can, nevertheless, comprise also input means which, however, can be used for different tasks. Then only the input means (buttons) of a the remote controller unit are used for controlling the data processing of the data processor. In other words, the buttons of operating elements provided on the remote control unit for controlling a predetermined feature of the electronic device need not to be provided on the main unit itself. If, by way of example, a button is provided on the remote control unit for controlling the sound level of the electronic device, no input means need to be provided on the main unit for controlling the sound level. It should be understood that the system can also be configured in such a way that for some key features of the electronic device input means may be provided on the remote control unit and on the main unit. However, according to one aspect of the invention the number of the two-fold provision of operating elements on the main unit and on the remote control unit should be minimized. Preferably, for most of the input means, the means are only provided on the main unit or on the remote control unit.

Also, the main unit can be dimensioned to be portable, which provides the advantage that especially mobile devices like organizers, note books, laptops, MP3-players, etc. can benefit from the advantage of not loosing the remote control unit during packing the electronic device in a transportation bag.

Furthermore, the main unit and the control unit can be adapted to be connectable in a snap-fit engangement in said receptacle. This provides a secure lock of the remote control unit in the receptacle which, however, can be opened easily when the remote control unit is to be used outside the receptacle in the first operation mode. An alternative solution to the snap-fit engagement is a hook-and-loop connection in a plug-in connector in/on said receptacle and the remote control unit.

According to the present invention the main unit has a flat main surface, wherein the control unit can be adapted to fit into said receptacle such that a surface of said remote control unit flushly abuts (or borders) to said main surface of said main unit. This provides the advantage that the chance of the remote control unit breaking out off the receptacle during a transport of the electronic device can be significantly reduced. Additionally, the handling of the electronic device in the second operation mode is easier as the electronic device has less edges on which an user of the electronic device can strike against when using the electronic device.

In a preferred embodiment said receptacle can be formed in a faceplate and one side surface of said main unit. This makes the input means of the remote control unit easily accessible when the electronic device is in the second operation mode.

Also, said receptacle can be located in said main surface and two side surfaces of the main unit perpendicular to said main surface. This provides the advantage that the remote control unit can be easily detached from the main unit as the remote control unit can, for example, be stripped-off in two directions sideways from the receptacle, which is located in the faceplate of the main unit.

According to another embodiment of the present invention said remote control unit is formed such that it also flushly abuts (or borders) to said side surface of said main unit. This also provides the advantage that the remote control unit does not detach from the main unit during transport of the electronic device (for example in a transportation bag) and additionally that a user of the electronic device does not strike against the remote control unit during usage of the electronic device in the second operation mode.

Furthermore, said input means of said remote control unit can comprise at least one button and/or one scroll wheel. This enables a very comfortable handling of the input means by the user of the electronic device either in the first or second operation mode.

Additionally, said input means of said remote control unit can be the only means for receiving control actions by a user of said electronic device. This makes sure that the cost reduction effect of only providing one set of input means can be achieved and that a user of the electronic device is not confused which input means for control actions is to be used.

Furthermore, said data processor can be configured for processing and displaying images and/or outputting sound. Such an electronic device can especially make use of the previously described advantages as for such electronic devices a detachable remote control unit is especially in danger to get lost after a use of the electronic device (for example in a conference). This is especially true if the apparatus is a TV, a DVD player, a home stereo system, a presentation equipement, a navigation system or a note book.

In another embodiment of the present invention said remote control unit has an accumulator and means for wirelessly receiving charging power for said accumulator and wherein said main unit is configured for inductively providing charging power to the accumulator of the remote control unit. This enables a convenient charging of said accumulator (for example in the second operation mode), especially when in the second operation mode also a wireless transmission of the control signal from the remote control unit to the main unit is used.

According to a further aspect of the present invention a method for operating an electronic device is provided, wherein the electronic device comprises:
- a main unit having
   - a data processor which is configured for processing data in response to a control signal;
   - a receptacle,
- a remote control unit comprising input means for controlling the electronic device;
the method comprising the following steps:
operating the electronic device in a first operating mode, in which the remote control unit is located outside the receptacle of the main unit, and in which the remote control unit provides said control signal via a wireless transmission to said data processor in response to control actions manually input via said input means by a user of the electronic device, or
operating the electronic device in a second operating mode, in which the remote control unit is positioned in said receptacle of the main unit and in which the control signal is also generated in response to control actions manually input via said input means of the remote control unit.

### Brief description of the drawings

Additional features and advantages of the present invention will become more readily appreciated from the following detailed description of preferred or advantageous embodiments with reference to the accompanying drawings.
Fig. 1a shows a schematic illustration of an embodiment of the inventive electronic device.
Fig. 1b shows a schematic illustration of another embodiment of the inventive electronic device.
Fig. 2 shows the usage of the electronic device according to an embodiment of the present invention.
Fig. 3 shows a flow diagram of a method for operating the electronic device according to an embodiment of the present invention.

### Description of preferred embodiments

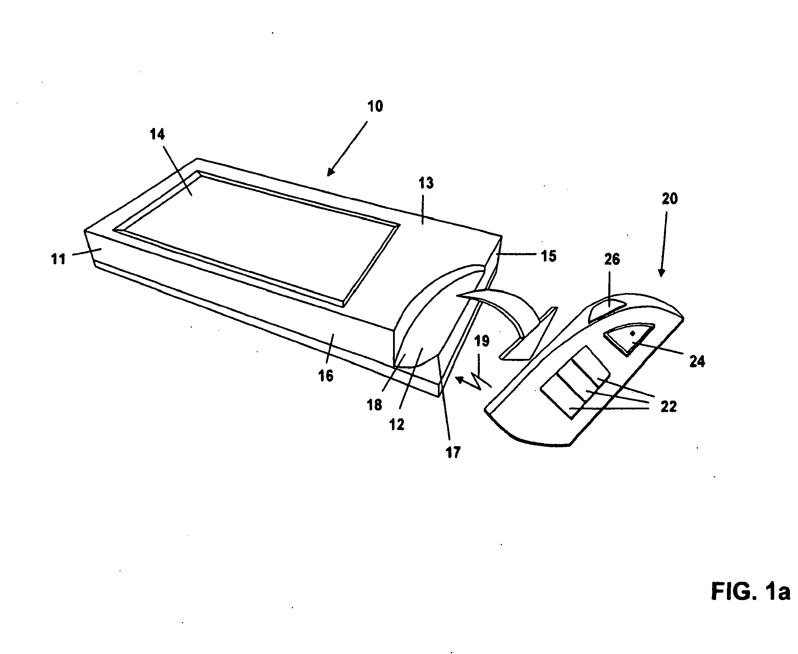

First, with reference to Fig. 1a, an electronic device will be explained which comprises a main unit 10 and a remote control unit 20. The main unit 10 has a main body 11 in which the receptacle 12 is formed. The main body 11 has, according to the embodiment shown in Fig. 1a, a flat front plate 13 (also denoted as faceplate), in which, for example, a screen 14 for displaying images is implemented. The receptacle 12 is formed in an outer area of the main unit 10 as shown in Fig. 1a such that it borders to three outer surfaces of the main unit 10, namely the faceplate 13 and two side faces 15 and 16 which are perpendicular to each other and also to the faceplate 13. Furthermore the receptacle 12 can be formed such that it has an elevation 17 near one side face 15 which has less a distance to the faceplate 13 than a cavity 18 which is located in larger distance from a said side face 15. By such a shape of the receptacle 20 it is possible that the remote control unit 20 can be securely fixed at the main unit 10 when it is positioned in the receptacle 12. Expressed in other words the elevation 17 prevents a sideways falling-out of the remote control unit 20 from the receptacle 12 in direction to side face 15. In this embodiment of the remote control unit 20 should have a shape which preferably fits well into said receptacle 12. The lock of the remote control unit 20 in the receptacle 12 can be achieved by an exact fit of the receptacle 12 with the remote control unit 20 such that a snap-fit engagement can be realized. Alternatively or in addition it is also possible to provide further engagement means like a hook-and-loop fastener or a plug-in connection in the receptacle 12 or on the remote control unit 20 (not shown in Fig. 1a). Furthermore, it is possible to magnetically couple the remote control unit 20 to the receptacle 12.

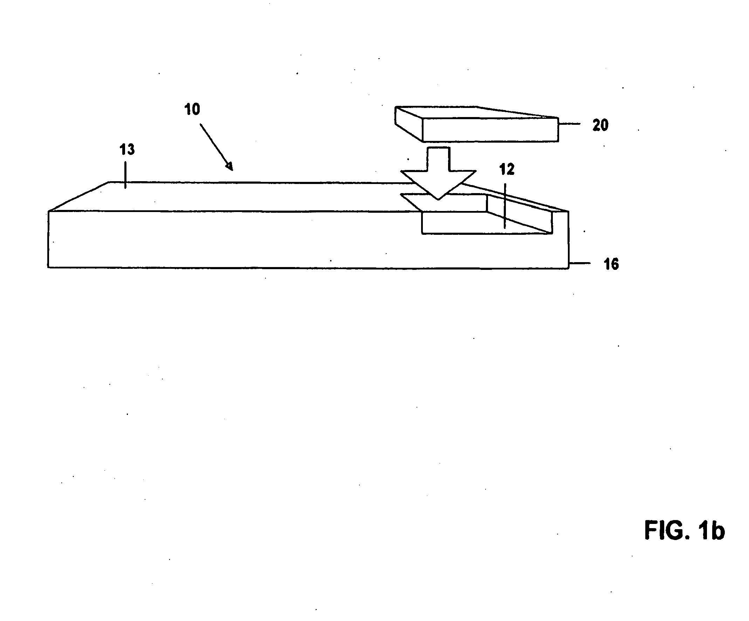

However, in an alternative embodiment (as shown in Fig. 1b) the receptacle 12 can be formed just in the faceplate 13 and one side face 16. In this embodiment a sidewise falling out of the remote control unit 20 from the receptacle 12 can strongly be prevented but also the flexibility of handling the remote control unit 20 is reduced as only a stripping off of the remote control unit 20 in the direction to the one side face 16 is possible.

The remote control unit 20 can comprise input means such as buttons 22, an on/off-switch 24 or a scrolling-wheel 26. These input means are intended for accepting control actions input to the remote control unit 20 by a user of the electronic device. Such control actions can, for example, be the on/off-switching of the main unit 10, respectively a data processor (not shown in Fig. 1a) in the main unit, the selection of an item from a scroll-down menu 10 (which is also not shown in Fig. 1a) using this scrolling-wheel 26 and selecting the selected item by pressing one of the depicted buttons 22. Then the remote control unit gererates a control signal 19 and (preferably) wirelessly transfers this signal to the main unit 10. Also the buttons 22 can have different functionalities as it is commonly known, for example, for TV remote control units or DVD remote control units. However, this functionality of the buttons 22, the on/off switch 24 and the score 9-wheeled 26 are only for exemplary purposes and shall not be considered to limit the scope of usage of these input means.

As can be seen in Figure 1b, the scrolling-wheel 26 can be provided on the remote control unit 20 in such a way that it is accessible only when the remote control unit is used detached from the main unit 10. When the remote control unit 20 is arranged in the receptacle 12, the scrolling-wheel cannot be activated or, in other words, is not accessible.

Summarizing, it is possible to provide input means on the remote control unit in such a way that they are only accessible when the remote control unit is not located inside the receptacle, and that they are not accessible when the remote control unit is positioned in the receptacle.

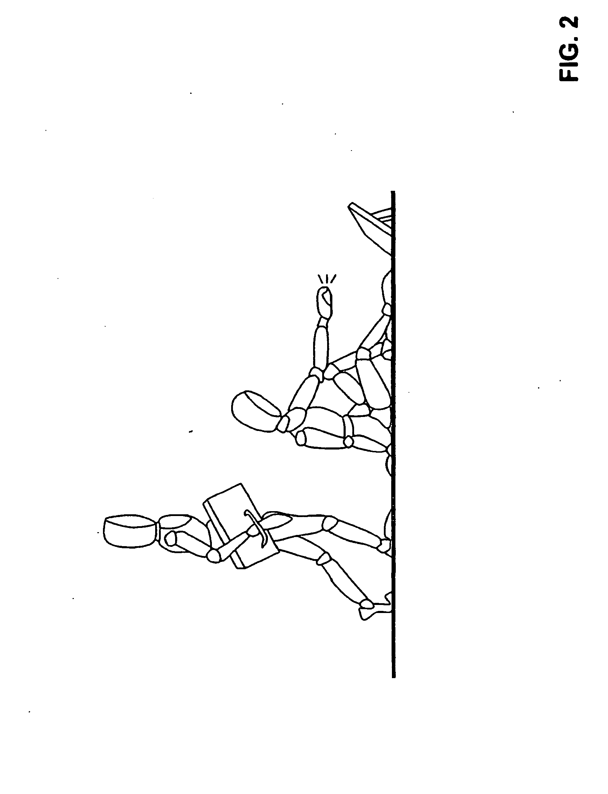

The first operation functionality of a the electronic device having said main unit 10 and said remote control unit 20 will be described int the following. Firstly, the electronic device (which is preferably a mobile or portable electronic device) can be unpacked from a transportation bag (in Fig. 1a also not shown) and the remote control unit 20 is stripped off the receptacle 12. Following, the main unit 10 is switched on by pressing the on/off-switch 24 of the remote control unit 20. Such steps are roughly depicted in the schematic picture of Fig. 2. Pressing the on/off-switch 24 results in wirelessly transferring another control signal 19 from the remote control unit 20 to the main unit 10 which activates the data processor (not shown in Fig. 1a) to start processing data in the main unit 10. This a processing of data can, for example, be a displaying of images on screen 14 or an outputing of sound via speakers (which are also not shown in Fig. 1a). Alternatively or in addition further data processing operations can be performed in the data processor as for example of performing a navigation calculation, reading of data from storage media, performing image or sound processing steps or the like. The data processing step to be performed by the data processor can thereby be controlled by the input means of the remote controlled unit 20, especially by the buttons 22 and the scrolling-wheel 26. The control actions are transformed in the remote control action into said control signal 19 which is then transferred to the main unit 10 respectively to the data processor. However, additional input means can also be provided on a said remote control unit 20, which can then also be used for controlling the data processing steps in the data processor of the main unit 10.

In a second operation mode the remote control unit 20 is kept in the receptacle 12 while all the previously mentioned steps of controlling the data processor of the main unit 10 are performed. In this second operation mode the data transmission from the remote control unit 20 to the main unit 10 can be either performed wirelessly, using the transmitter means of a the remote control unit 20 and the reception means of the main unit 10 as in the first operation mode or alternatively by a plug-in connector which is positioned in or on the receptacle 12 and the remote control unit 20 respectively. The second operation mode provides the advantage that the remote control unit 20 has not to be stripped-off from the receptacle 12 when the user is in close proximity to the electronic device.

A main aspect of the present invention can be seen in the fact that the data processor is mainly controlled via the input means of the remote control unit 20 either in first or in the second operation mode. The remote control unit 20 can hereby be either stripped-off from the receptacle 12 (first operation mode) or be kept in the receptacle 12 (second operation mode). However, on the main unit 10 there can also be different input means for control actions like further buttons, scrolling-wheels etc. which, preferably, cannot control the same actions which are controlled by the input means of the remote control unit 20. This means that data processing steps which are preformed in response to actions input via the input means of the remote control unit 20 should be only controlled by these input means. Such a configuration of the main unit 10 and the remote control unit 20 provides the advantages that, on the one hand, a loss of the remote control unit 20 can be avoided when the electronic device is used in the second operation mode and, on the other hand, a duplication of input means like buttons 22, scrolling-wheels 26 on the main unit 10 as well as on the remote control unit 20 can also be avoided, thus reducing production costs for the electronic device.

Furthermore, in another embodiment of the present invention the remote control unit 20 fits into the receptacle 12 such that a surface of the remote control unit 20 flushly borders (or abuts) to the faceplate 13 of the main unit 10 (and preferably also to the side faces 15 and 16) which provides the advantage that the remote control unit 20 shows no extending edges which would lead a user to unintentionally strip-off the remote control unit 20 when operating the electronic device in the the second operation mode, when packing the electronic device into said transportation bag or during the transport of the electronic device in said transportation bag. Thus, the chance of loosing the remote control unit 20 is again reduced. In addition, such an embodiment also reduces the possibility that a user of the electronic device gets hurt.

In another embodiment of the present invention it is also possible that the power supply of the remote control unit, preferably an accumulator, can be inductively charged by a coil in the main unit 10 which provides the advantage that no separate charging of said power supply is necessary and that the charging and can either be performed in the second operation mode or during the transport in the transportation bag without the need of an extra plug-in connection between the main unit and the remote control unit. This is not only a very user convenient way of charging the power supply of the remote control unit 20 but also a cost effective approach as no connectors are needed.

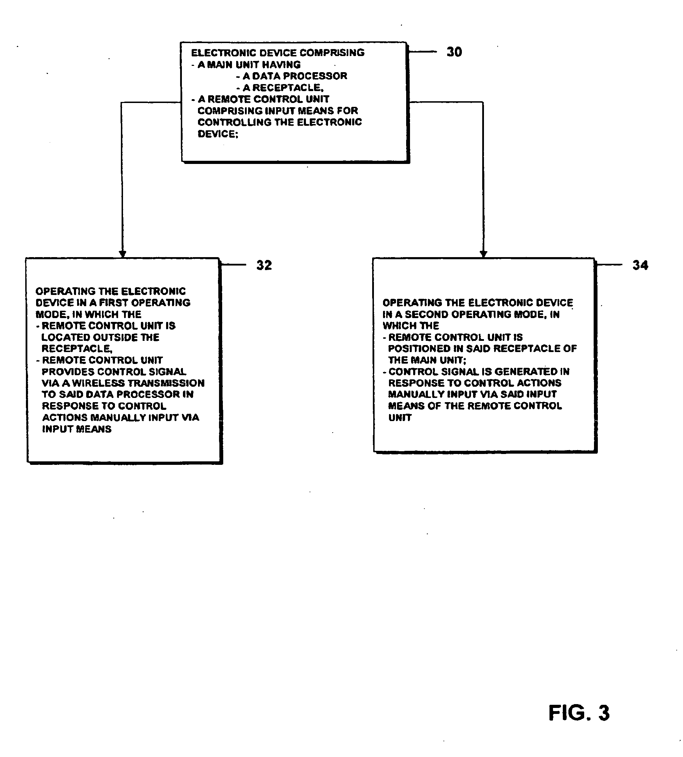

In another aspect of the present invention a method for operating said electronic device is provided which is more clearly depicted in Fig. 3. To be more specific, said electronic device 30 has said main unit 10, comprising a data processor and the receptacle 12, as well as said remote control unit 20. In a first operation mode 32 the electronic device can be operated (respectively controlled) by the remote control unit 20 being exterior to the receptacle 12. In this case the control signals resulting from the manually input control actions to the remote control unit 20 are wirelessly transmitted to the main unit thus providing a maximum degree of freedom when moving the remote control unit 20 with respect to the main unit 10. Alternatively, the electronic device 30 can be operated in the second operation mode 34 in which the remote control unit 20 is positioned in the receptacle 12. Especially the combination of the first and second operation mode provides the high degree of flexibility of the present invention as to reduce the possibility of loosing or forgetting the remote control unit when storing or transporting the electronic device (as the remote control unit is always in the predefined location for it) as well as reducing the production costs of said electronic device due to the fact that no doublication of input means for accepting control actions is needed.

Summarizing it can be stated that remote controls are well known for many devices like TVs, DVD players, home stereos etc. Remotes are also known for mobile devices, like mobile navigation systems or DVD players. The invention describes a remote control, preferably but not only for mobile devices like navigation systems or DVD players, that can be used in two ways. The normal use case is the use as a normal remote controller. In the second use case the remote is locked into the faceplate of the system and becomes part of the fixed, non-remote H in my of the system. A scribble of the invention is attached in Figs. 1 and 2. This remote control has several advantage as the overall number of buttons can be reduced, since doubles are not required. In the use case "non the remote" the remote controller cannot get lost, since it is plugged into the receptacle of the faceplate of the system.

## Claims

1. Electronic device comprising:
- a main unit (10) having a flat main surface (13) and having
- a data processor which is configured for processing data in response to a control signal;
- a receptacle (12),
- a remote control unit (20) comprising input means for controlling the electronic device, wherein in a first operating mode, in which the remote control unit (20) is located outside the receptacle (12) of the main unit (10), the remote control unit (20) is configured for providing said control signal (19) via a wireless transmission to said data processor in response to control actions manually input via said input means by a user of the electronic device,
wherein, in a second operating mode, in which the remote control unit (20) is positioned in said receptacle (12) of the main unit (10), the control signal is also generated in response to control actions manually input via said input means of the remote control unit (20); and
wherein the remote control unit (20) is adapted to fit into said receptacle (12) such that a surface of said remote control unit (20) flushly borders to said main surface (13) of said main unit (10).

2. Electronic device according to claim 1, **characterized in that** said remote control unit (20) and said main unit (10) each have a connector which is adapted for transferring said control signal (19) from said remote control unit (20) to said main unit (10) such that in the second operation mode both connectors are directely in contact with each other.

3. Electronic device according to claim 1, **characterized in that** said remote control unit (20) is adapted for transfering the control signal (19) in the first operation mode wirelessly from the remote control unit (20) to the main unit (10).

4. Electronic device according to one of claims 1 to 3, **characterized in that** said remote control unit (20) is configured for unidirectionally transfering signals, especially said control signal (19), to said main unit (10).

5. Electronic device according to one of claims 1 to 4, **characterized in that** the main unit (10) has further input means, wherein the data processor is configured for processing the data in response to the control signal received from the remote control unit (20) and for not processing the data in response to a signal input via the further input means of the main unit (10).

6. Electronic device according to one of claims 1 to 5, **characterized in that** said main unit (10) is dimensioned to be portable.

7. Electronic device according to one of claims 1 to 6, **characterized in that** said main unit (10) and the remote control unit (20) are adapted to be connected in a snap-fit engagement in said receptacle (12).

8. Electronic device according to one of claims 1 to 7, **characterized in that** said receptacle (12) is formed in a faceplate (13) and one side surface (16) of said main unit (10).

9. Electronic device according to claims 1 to 8, **characterized in that** said receptacle (12) is located in said faceplate (13) and two side surfaces (15, 16) of the main unit (10) perpendicular to said faceplate (13).

10. Electronic device according to claim 9, **characterized in that** said remote control unit (20) is formed such that it flushly borders to at least one side surface (15, 16) of said main unit (10).

11. Electronic device accoding to one of claims 1 to 10, **characterized in that** said input means (22, 24, 26) of said remote control unit comprises at least one button (22, 24) and/or one scroll wheel (26).

12. Electronic device according to one of claims 1 to 11, **charactierized in that** said input means of said remote control unit (20) is the only means for receiving control actions by a user of said electronic device.

13. Electronic device according to one of claims 1 to 12, **characterized in that** said data processor is configured for processing and displaying images and/or outputting sound.

14. Electronic device according to claim 13, **characterized in that** the apparatus is a TV, a DVD player, a home stereo system, a presentation equipement, a navigation system or a note book.

15. Electronic device according to one of claims 1 to 14, **characterized in that** said remote control unit (20) has an accumulator and means for wirelessly receiving charging power for said accumulator and wherein said main unit (10) is configured for inductively providing charging power for the accumulatior of the remote control unit (20).

16. Method for operating an electronic device (30), the electronic device (30) comprising:
- a main unit (10) having a flat main surface (13) and having
- a data processor which is configured for processing data in response to a control signal (19);
- a receptacle (12),
- a remote control unit (20) comprising input means for controlling the electronic device, the remote control unit (20) being adapted to fit into said receptacle (12) such that a surface of said remote control unit (20) flushly borders to said main surface (13) of said main unit (10);
the method comprising the following steps:
operating the electronic device in a first operating mode (32), in which the remote control unit (20) is located outside the receptacle (12) of the main unit (10), and in which the remote control unit (20) provides said control signal (19) via a wireless transmission to said data processor in response to control actions manually input via said input means by a user of the electronic device (30), or
operating the electronic device in a second operating mode (34), in which the remote control unit (20) is positioned in said receptacle (12) of the main unit (10), and in which the control signal (19) is also generated in response to control actions manually input via said input means of the remote control unit (20), wherein the remote control unit (20) flushly borders to said main surface (13) of said main unit (10) in said second operating mode (34).

## Patentansprüche

1. Elektronische Vorrichtung, umfassend:
- eine Haupteinheit (10), welche eine flache Hauptoberfläche (13) aufweist und zusätzlich aufweist
- einen Datenprozessor, welcher zur Verarbeitung von Daten abhängig von einem Steuersignal ausgestaltet ist;
- eine Aufnahme (12),
- eine Fernbedienungseinheit (20), welche Eingabemittel zur Steuerung der elektronischen Vorrichtung umfasst, wobei die Fernbedienungseinheit (20) in einer ersten Betriebsart, in welcher sich die Fernbedienungseinheit (20) außerhalb der Aufnahme (12) der Haupteinheit (10) befindet, zur Bereitstellung des Steuersignals (19) mittels einer drahtlosen Übertragung zu dem Datenprozessor abhängig von Steuervorgängen ausgestaltet ist, welche manuell über die Eingabemittel von einem Benutzer der elektronischen Vorrichtung eingegeben werden,
wobei das Steuersignal in einer zweiten Betriebsart, bei welcher die Fernbedienungseinheit (20) in der Aufnahme (12) der Haupteinheit (10) angeordnet ist, auch abhängig von Steuervorgängen erzeugt wird, welche manuell über die Eingabemittel der Fernbedienungseinheit (20) eingegeben werden; und
wobei die Fernbedienungseinheit (20) derart ausgestaltet ist, dass sie in die Aufnahme (12) eingepasst ist, so dass eine Oberfläche der Fernbedienungseinheit (20) bündig an die Hauptfläche (13) der Haupteinheit (10) angrenzt.

2. Elektronische Vorrichtung nach Anspruch 1, **dadurch gekennzeichnet, dass** die Fernbedienungseinheit (20) und die Haupteinheit (10) jeweils ein Verbindungselement aufweisen, welches zur Übertragung des Steuersignals (19) von der Fernbedienungseinheit (20) zu der Haupteinheit (10) ausgestaltet ist, so dass sich in der zweiten Betriebsart beide Verbindungselemente direkt in Kontakt miteinander befinden.

3. Elektronische Vorrichtung nach Anspruch 1, **dadurch gekennzeichnet, dass** die Fernbedienungseinheit (20) zur drahtlosen Übertragung des Steuersignals (19) in der ersten Betriebsart von der Fernbedienungseinheit (20) zu der Haupteinheit (10) ausgestaltet ist.

4. Elektronische Vorrichtung nach einem der Ansprüche 1 bis 3, **dadurch gekennzeichnet, dass** die Fernbedienungseinheit (20) zur unidirektionalen Übertragung von Signalen, insbesondere des Steuersignals (19), zu der Haupteinheit (10) ausgestaltet ist.

5. Elektronische Vorrichtung nach einem der Ansprüche 1 bis 4, **dadurch gekennzeichnet, dass** die Haupteinheit (10) weitere Eingabemittel aufweist, wobei der Datenprozessor zur Verarbeitung der Daten abhängig von dem Steuersignal, welches von der Fernbedienungseinheit (20) empfangen wird, und nicht zur Verarbeitung der Daten abhängig von einem Signal, welches über die weiteren Eingabemittel der Haupteinheit (10) eingegeben wird, ausgestaltet ist.

6. Elektronische Vorrichtung nach einem der Ansprüche 1 bis 5, **dadurch gekennzeichnet, dass** die Haupteinheit (10) derart dimensioniert ist, dass sie tragbar ist.

7. Elektronische Vorrichtung nach einem der Ansprüche 1 bis 6, **dadurch gekennzeichnet, dass** die Haupteinheit (10) und die Fernbedienungseinheit (20) derart ausgestaltet sind, dass sie bei einem einrastenden Eingriff in der Aufnahme (12) verbunden sind.

8. Elektronische Vorrichtung nach einem der Ansprüche 1 bis 7, **dadurch gekennzeichnet, dass** die Aufnahme (12) in einer Frontplatte (13) und einer Seitenoberfläche (16) der Haupteinheit (10) ausgebildet ist.

9. Elektronische Vorrichtung nach einem der Ansprüche 1 bis 8, **dadurch gekennzeichnet, dass** die Aufnahme (12) in der Frontplatte (13) und zwei Seitenoberflächen (15, 16) der Haupteinheit (10) senkrecht zu der Frontplatte (13) angeordnet ist.

10. Elektronische Vorrichtung nach Anspruch 9, **dadurch gekennzeichnet, dass** die Fernbedienungseinheit (20) derart ausgebildet ist, dass sie bündig an mindestens eine Seitenoberfläche (15, 16) der Haupteinheit (10) angrenzt.

11. Elektronische Vorrichtung nach einem der Ansprüche 1 bis 10, **dadurch gekennzeichnet, dass** die Eingabemittel (22, 24, 26) der Fernbedienungseinheit mindestens einen Knopf (92, 24) und/oder ein Bildlaufrad (26) umfassen.

12. Elektronische Vorrichtung nach einem der Ansprüche 1 bis 11, **dadurch gekennzeichnet, dass** die Eingabemittel der Fernbedienungseinheit (20) die einzigen Mittel sind, um Steuervorgänge von einer Bedienperson der elektronischen Vorrichtung zu empfangen.

13. Elektronische Vorrichtung nach einem der Ansprüche 1 bis 12, **dadurch gekennzeichnet, dass** der Datenprozessor zur Verarbeitung und zur Darstellung von Bildern und/oder zur Ausgabe von Geräuschen ausgestaltet ist.

14. Elektronische Vorrichtung nach Anspruch 13, **dadurch gekennzeichnet, dass** die Vorrichtung ein Fernseher, ein DVD-Spieler, ein Heim-Stereosystem, eine Präsentationsvorrichtung, ein Navigationssystem oder ein Notebook ist.

15. Elektronische Vorrichtung nach einem der Ansprüche 1 bis 14, **dadurch gekennzeichnet, dass** die Fernbedienungseinheit (20) einen Akkumulator und Mittel zur drahtlosen Aufnahme von Ladestrom für den Akkumulator aufweist, und wobei die Haupteinheit (10) zur induktiven Bereitstellung von Ladestrom für den Akkumulator der Fernbedienungseinheit (20) ausgestaltet ist.

16. Verfahren zum Betrieb einer elektronischen Vorrichtung (30), wobei die elektronische Vorrichtung (30) umfasst:
- eine Haupteinheit (10), welche eine flache Hauptoberfläche (13) aufweist und zusätzlich aufweist
- einen Datenprozessor, welcher zur Verarbeitung von Daten abhängig von einem Steuersignal (19) ausgestaltet ist;
- eine Aufnahme (12),
- eine Fernbedienungseinheit (20), welche Eingabemittel zur Steuerung der elektronischen Vorrichtung umfasst, wobei die Fernbedienungseinheit (20) derart ausgestaltet ist, dass sie in die Aufnahme (12) eingepasst ist, so dass eine Oberfläche der Fernbedienungseinheit (20) bündig an die Hauptoberfläche (13) der Haupteinheit (10) angrenzt;
wobei das Verfahren die folgenden Schritte umfasst:
Betreiben der elektronischen Vorrichtung in einer ersten Betriebsart (32), in welcher sich die Fernbedienungseinheit (20) außerhalb der Aufnahme (12) der Haupteinheit (10) befindet, und bei welcher die Fernbedienungseinheit (20) das Steuersignal (19) mittels einer drahtlosen Übertragung dem Datenprozessor abhängig von Steuervorgängen bereitstellt, welche manuell über die Eingabemittel durch einen Benutzer der elektronischen Vorrichtung (30) eingegeben werden, oder
Betreiben der elektronischen Vorrichtung in einer zweiten Betriebsart (34), in welcher die Fernbedienungseinheit (20) in der Aufnahme (12) der Haupteinheit (10) angeordnet ist und in welcher das Steuersignal (19) auch abhängig von Steuervorgängen erzeugt wird, welche manuell über die Eingabemittel der Fernbedienungseinheit (20) eingegeben werden, wobei in der zweiten Betriebsart (34) die Fernbedienungseinheit (20) bündig an die Hauptfläche (13) der Haupteinheit (10) angrenzt.

## Revendications

1. Dispositif électronique comprenant:
- une unité principale (10) ayant une surface principale plane (13) et comprenant
- une machine de traitement de données configurée pour traiter des données en réponse à un signal de commande;
- un réceptacle (12),
- une unité de télécommande (20) comprenant un moyen d'entrée pour commander le dispositif électronique,
dans lequel, dans un premier mode opératoire, l'unité de télécommande (20) étant située à l'extérieur du réceptacle (12) de l'unité principale (10), l'unité de télécommande (20) est configurée pour fournir ledit signal de commande (19) à ladite machine de traitement de données par l'intermédiaire d'une transmission sans fil en réponse à des commandes entrées manuellement par un utilisateur du dispositif électronique par l'intermédiaire du moyen d'entrée,
dans lequel, dans un deuxième mode opératoire, l'unité de télécommande (20) étant positionnée à l'intérieur dudit réceptacle (12) de l'unité principale (10), le signal de commande est également généré en réponse à des commandes entrées manuellement par l'intermédiaire dudit moyen d'entrée de l'unité de télécommande (20); et
dans lequel l'unité de télécommande (20) est adaptée pour s'emboîter dans ledit réceptacle (12) de telle manière qu'une surface de ladite unité de télécommande (20) affleure ladite surface principale (13) de ladite unité principale (10).

2. Dispositif électronique selon la revendication 1, **caractérisé en ce que** ladite unité de télécommande (20) et ladite unité principale (10) comportent chacune un connecteur adapté pour transférer ledit signal de commande (19) de ladite unité de télécommande (20) vers ladite unité principale (10) de telle manière que, dans le deuxième mode opératoire, les deux connecteurs sont directement en contact l'une avec l'autre.

3. Dispositif électronique selon la revendication 1, **caractérisé en ce que** ladite unité de télécommande (20) est adaptée pour, dans le premier mode opératoire, transférer sans fil le signal de commande (19) de l'unité de télécommande (20) vers l'unité principale (10).

4. Dispositif électronique selon l'une des revendications 1 à 3, **caractérisé en ce que** ladite unité de télécommande (20) est configurée pour transférer des signaux, en particulier ledit signal de commande (19), de manière unidirectionnelle vers ladite unité principale (10).

5. Dispositif électronique selon l'une des revendications 1 à 4, **caractérisé en ce que** l'unité principale (10) comporte d'autres moyens d'entrée, la machine de traitement de données étant configurée pour traiter les données en réponse au signal de commande reçu de l'unité de télécommande (20) et pour ne pas traiter les données en réponse à un signal entré par l'intermédiaire des autres moyens d'entrée de l'unité principale (10).

6. Dispositif électronique selon l'une des revendications 1 à 5, **caractérisé en ce que** ladite unité principale (10) est dimensionnée pour être portable.

7. Dispositif électronique selon l'une des revendications 1 à 6, **caractérisé en ce que** ladite unité principale (10) et l'unité de télécommande (20) sont adaptées pour être reliées dans ledit réceptacle (12) par un assemblage à encliquetage.

8. Dispositif électronique selon l'une des revendications 1 à 7, **caractérisé en ce que** ledit réceptacle (12) est formé dans un cache (13) et dans une surface latérale (16) de ladite unité principale (10).

9. Dispositif électronique selon les revendications 1 à 8, **caractérisé en ce que** ledit réceptacle (12) se trouve dans le cache (13) et dans deux faces latérales (15, 16) de l'unité principale (10) perpendiculaires audit cache (13).

10. Dispositif électronique selon la revendication 9, **caractérisé en ce que** ladite unité de télécommande (20) est formée de telle manière qu'elle affleure au moins une surface latérale (15, 16) de ladite unité principale (10).

11. Dispositif électronique selon l'une des revendications 1 à 10, **caractérisé en ce que** ledit moyen d'entrée (22, 24, 26) de ladite unité de télécommande comprend au moins un bouton (22, 24) et/ou une molette de défilement (26).

12. Dispositif électronique selon l'une des revendications 1 à 11, **caractérisé en ce que** ledit moyen d'entrée de ladite unité de télécommande (20) est le seul moyen pour recevoir des commandes d'un utilisateur dudit dispositif électronique.

13. Dispositif électronique selon l'une des revendications 1 à 12, **caractérisé en ce que** ladite machine de traitement de données est configurée pour traiter et afficher des images et/ou pour émettre du son.

14. Dispositif électronique selon la revendication 13, **caractérisé en ce que** l'appareil est une télévision, un lecteur DVD, une chaîne hi-fi domestique, un équipement de présentation, un système de navigation ou un portable.

15. Dispositif électronique selon l'une des revendications 1 à 14, **caractérisé en ce que** ladite unité de télécommande (20) comporte un accumulateur et des moyens pour recevoir sans fil une puissance de charge pour ledit accumulateur, et dans lequel ladite unité principale (10) est configurée pour fournir inductivement une puissance de charge pour l'accumulation de l'unité de télécommande (20).

16. Procédé pour manipuler un dispositif électronique (30), le dispositif électronique (30) comprenant:
- une unité principale (10) ayant une surface principale plane (13) et comprenant
- une machine de traitement de données configurée pour traiter des données en réponse à un signal de commande (19);
- un réceptacle (12),
- une unité de télécommande (20) comprenant un moyen d'entrée pour commander le dispositif électronique, l'unité de télécommande (20) étant adaptée à s'emboîter dans ledit réceptacle (12) de telle manière qu'une surface de ladite unité de télécommande (20) affleure la surface principale (13) de ladite unité principale (10);
le procédé comprenant les étapes suivantes:
faire fonctionner le dispositif électronique selon un premier mode opératoire (32), dans lequel l'unité de télécommande (20) se trouve à l'extérieur du réceptacle (12) de l'unité principale (10), et dans lequel l'unité de télécommande (20) fournit ledit signal de commande (19) par l'intermédiaire d'une transmission sans fil vers ladite machine de traitement de données en réponse à des commandes entrées manuellement par un utilisateur du dispositif électronique (30) par l'intermédiaire dudit moyen d'entrée, ou
faire fonctionner le dispositif électronique selon un deuxième mode opératoire (34), dans lequel l'unité de télécommande (20) est positionnée à l'intérieur dudit réceptacle (12) de l'unité principale (10), et dans lequel le signal de commande (19) est également généré en réponse à des commandes entrées manuellement par l'intermédiaire dudit moyen d'entrée de l'unité de télécommande (20), dans lequel l'unité de télécommande (20) affleure ladite surface principale (13) de ladite unité principale (10) dans ledit deuxième mode opératoire (34).
